# EUROPEAN PATENT APPLICATION

(11) **EP 1 521 057 A1**
(43) Date of publication of application: **06.04.2005**
(21) Application number: 03741135.2
(22) Date of filing: 30.06.2003
(51) Int. Cl.: G01C 21/00, G08G 1/005

(54) **SELF-MOVEMENT SUPPORT SYSTEM, ITS METHOD, AND RECORDING MEDIUM**

(30) Priority: 03.07.2002 JP 2002195049
(71) Applicant: National Institute of Information and Communications Technology Incorporated Administrative Agency, Koganei-shi, Tokyo (JP); Tg Information Network Co., Ltd., Shinjuku-ku, Tokyo 163-1022 (JP)
(72) Inventor: YAIRI, Ikuko Nat.Inst. of Inf. and Comm.Tech.Inc., Koganei-shi, Tokyo 184-8795 (JP); KUWAHARA, Osamu TG INFORMATION NETWORK CO., LTD., Shinjuku-ku, Tokyo 163-1022 (JP); YOSHIOKA, Hiroshi TG INFORMATION NETWORK CO.,LTD., Shinjuku-ku, Tokyo 163-1022 (JP)
(74) Representative: Hering, Hartmut, Dipl.-Ing.
(86) International application number: PCT/JP2003/008283
(87) International publication number: WO 2004/005851

(57) **Abstract**

The self-sustained moving support system 1 computes the optimum guide route depending on the physical information from the sidewalk data based on the physical information inputted from the mobile computer 8, combines the guide route with a map data to create an electronic map and sends the electronic map to the mobile computer 8 to display the guide route. Both sides of the guide route displayed on the map are controlled along the blocks in order to provide more detailed information for handicapped persons and either side to be passed is indicated. Thereby the optimum guide route depending on the disability condition of each user can be certainly set in the shortest time.

## Description

### TECHNICAL FIELD

The present invention relates to a self-sustained moving support system, a method of the same and a recording medium, especially, in particular to a technology applicable for the barrier-free moving support for handicapped persons and aged persons.

### BACKGROUND ART

In order to support the moving of handicapped persons and aged persons, it is necessary to provide barrier and barrier-free information regarding the route to a certain area or the destination. The definition of the barrier and the barrier-free is different depending on the physical condition of each user. For example, a pedestrian bridge may be a barrier for wheelchair users, meanwhile it may be the safe barrier-free facility for visually impaired persons. That is to say, it is important to provide information depending on the physical condition of each user.

As a system for providing the barrier information, Japanese Patent Application Laid-Open Publication No. 2000-31005 is taken for example. Where the optimum route is retrieved from the database in which barrier information collected by home attendants or so is stored based on the search condition such as a place of departure, a destination and a condition to go out, and the search result is provided to a fax or a mobile computer.

However, the present inventors found that the above described technology for providing barrier information had the following problem.

Sidewalk-centered roads where pedestrians can walk are changed every day, and therefore such barrier information must be frequently updated so that the man-hour and the cost are significantly increased.

Additionally, the route from the place of departure to the destination searched is indicated by common map data mainly for automobiles, therefore the detailed sidewalk information for pedestrians can not be obtained.

Accordingly, if the sidewalks exist on both sides of the driveway, users have to determine which of the sidewalks is to use so that an appropriate navigation depending on the situation can not be provided.

An object of the present invention is to provide a self-sustained moving support system being capable of setting the optimum guide route depending on each disability condition, a method of the same and a recording medium.

Another object of the present invention is to provide a self-sustained moving support system being capable of updating the attribute information used for computing the guide route at low cost and in a short period of time, and obtaining the reliable information, a method of the same and a recording medium.

### DISCLOSURE OF THE INVENTION

Hereinafter the summary of the representative example of the present invention is described briefly.

The self-sustained moving support system of the present invention is characterized in that the self-sustained moving support system comprises a database to store therein sidewalk data and map data, and information processing means to retrieve the database based on the moving support information received through a communication network, compute a guide route of the sidewalk to a destination depending on each disability condition from the sidewalk data and output an electronic map in which the guide route is combined with the map data.

Additionally, the self-sustained moving support system of the present invention is characterized in that the self-sustained moving support system further comprises a communications terminal connected to the communication network to display the electronic map received from the information processing means.

Further, the self-sustained moving support system of the present invention is characterized in that the self-sustained moving support system comprises the database to store therein the sidewalk data and the map data, the information processing means to search the database based on the moving support information received through the communication network, compute a guide route of the sidewalk to the destination depending on each disability condition from the sidewalk data and output the electronic map in which the guide route is combined with the map data and moving means provided with the communication terminal which is connected to the communication network to display the electronic map received from the information processing means.

Additionally, the self-sustained moving support system of the present invention is characterized in that the moving means is provided with information measuring means to collect the attribute information of a moving route.

A method of supporting a self-sustained moving of the present invention is characterized in that the method of supporting a self-sustained moving comprises the steps of: inputting physical condition information and a destination from the communication terminal; computing the guide route of a sidewalk according to the physical condition based on the physical information inputted from the communication terminal and the sidewalk data stored in the database; combining the computed guide route with the map data stored in the database and outputting it as an electronic map; and displaying the electronic map showing the guide route on the communication terminal.

Additionally, a method of supporting a self-sustained moving of the present invention is characterized in that the guide route of the electronic map displayed on the communication terminal is displayed to designate the sidewalk to be passed.

Additionally, a method of supporting a self-sustained moving of the present invention is characterized in that the step of computing the guide route includes preferentially computing the sidewalk which has been passed by a plurality of users having similar physical.

Additionally, a method of supporting a self-sustained moving of the present invention is characterized in that the method of supporting a self-sustained moving further comprises the steps of: automatically collecting attribute information of the route along which the moving means is moved by the information measuring unit; sending the collected attribute information to the information processing means; and updating the sidewalk data stored in the database based on the received attribute information.

Further, the method of supporting a self-sustained moving of the present invention is characterized in that the step of updating the sidewalk data includes the steps of: determining whether the received attribute information is the investigated area or not; assigning the collected attribute information to the sidewalk data for the existing area to update the sidewalk data stored in the database if the information is the investigated area; and creating a new sidewalk data with the block in the map data and the positional information of a sidewalk map and storing the sidewalk data in the database if the information is the uninvestigated area.

A recording medium of the present invention is characterized in that the recording medium records a computer system-implemented program, the computer system performs the following steps of: computing the guide route of a sidewalk according to the physical information and the destination inputted from the communication terminal based on the sidewalk data stored in the database; and combining the computed guide route with a map data stored in the database and outputting it as an electronic map.

### BRIEF DESCRIPTION OF THE DRAWINGS

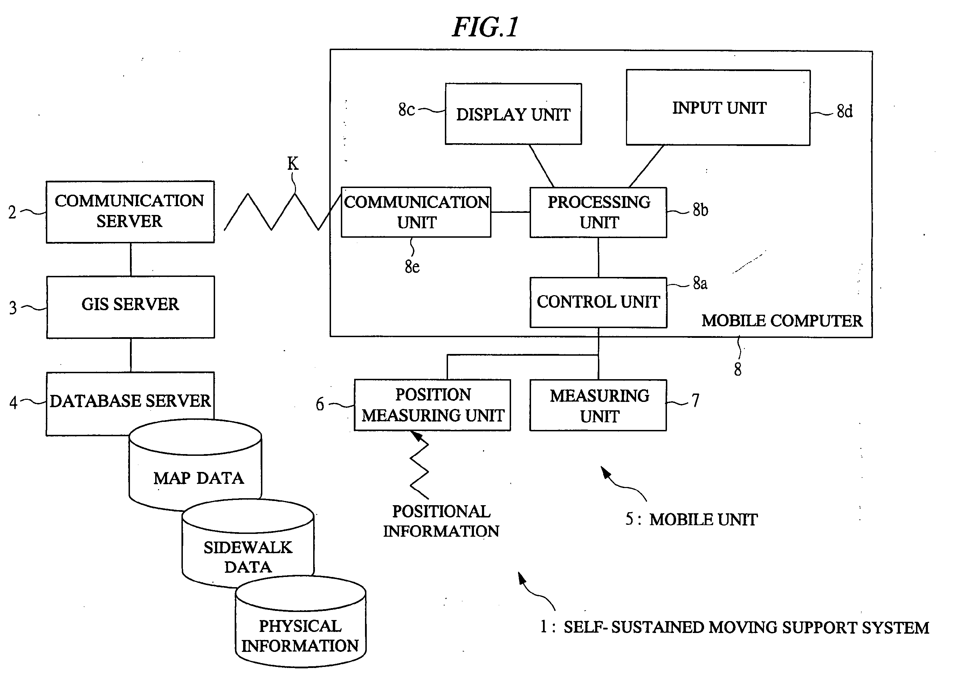

FIG. 1 is an explanatory view of the configuration of the self-sustained moving support system according to an embodiment of the present invention;
FIG. 2 is a flowchart of the route search using the self-sustained moving support system of FIG. 1;
FIG. 3 is a flowchart of an example when a user collects the attribute information using the self-sustained moving support system of FIG. 1;
FIG. 4 is a flowchart of an example when an investigator collects the attribute information using the self-sustained moving support system of FIG. 1; and
FTG. 5 is an example of the display of the routing guide when the route is searched using the self-sustained moving support system of FIG. 1.

### BEST MODE FOR CARRYING OUT THE INVENTION

The preferred embodiment of the present invention will now be described in detail with reference to the attached drawing. Incidentally, in all of the referred drawings, the same reference numerals will be used for the components having the same function so that the description will be omitted.

In the present embodiment, a self-sustained moving support system 1 comprises a communication server (information processing means) 2, a GIS server (information processing means) 3, a database server (database) 4 and a mobile unit 5 and so on.

The communication server 2 is connected to the GIS server 3. The GIS server 3 is connected to a communication network K such as Internet and Intranet through the communication server 2.

The database server 4 is also connected to the GIS server 3. Various information such as map data, sidewalk data and physical information, for supporting the self-sustained moving of various type of handicapped persons and aged persons are stored in the database server 4.

The map data is general map data and is personal information (moving support information) such as an address, sex, age group, and disability condition of each user.

The sidewalk data is comprised of attribute information and geometrical information. The attribute information and the geometrical information are associated with each other and stored in the database server 4. The attribute information is comprised of various information measured by an after-described position measuring unit 6 and measuring unit 7.

The geometrical information is comprised of line information representing various routes such as a sidewalk and a pedestrian bridge through which users are moved and point information representing spot information of various barrier such as a bench and a lavatory inputted from the mobile terminal 8.

The mobile unit 5 is installed into such as a wheelchair (moving means) and comprised of the position measuring unit (information processing means) 6, measuring unit (information processing means) 7 and a mobile computer (communication terminal) 8.

The position measuring unit 6 detects the current position of the wheelchair utilizing D (Differential)-GPS correction data which is obtained by correcting the positioning error of GPS (Global Positioning System) satellite.

The position measuring unit 6 is provided with a map matching skill thereby the error of the coordinate information of the obtained current position can be reduced to less than several tens cm to improve the precision up to the sidewalk level.

The measuring unit 7 is comprised of a slope measuring unit, a distance measuring unit, an orientation measuring unit and a speed measuring unit.

The slope measuring unit measures the step and the slop on a sidewalk by measuring the inclination of the wheelchair. The distance measuring unit measures the moving distance of the wheelchair. The orientation measuring unit measures the orientation of the wheelchair in the direction of movement. The speed measuring unit measures the vehicle speed and the acceleration of the wheelchair and so on.

The attribute information measured by the position measuring unit 6, the slope measuring unit, the distance measuring unit, the orientation measuring unit and the speed measuring unit is output to the mobile computer 8. The mobile computer 8 is such as a book-size personal computer and comprised of a control unit 8a, processing unit 8b, display unit 8c, input unit 8d and communication unit 8e. The communication unit 8e of the mobile computer 8 is connected to the GIS server 3 through the communication network K thereby the mobile computer 8 sends the attribute information to the GIS server 3.

The mobile computer 9 has a navigation function thereby to navigate the route to the destination based on the navigation information provided from the GIS server 3.

Next, the operation of the present embodiment is described.

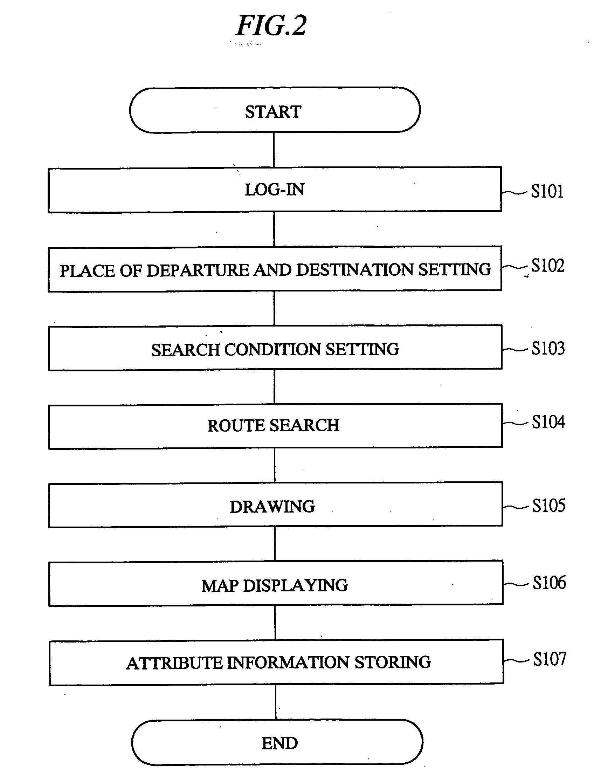

It is described regarding the searching of the optimum route by the self-sustained moving support system 1 with reference to the flowchart of FIG. 2.

Firstly, a user previously accesses the GIS server 3, inputs the personal information from a registration page and obtains a user name and a password. The personal information is such as an address, sex, age group and disability condition. The information is stored in the database server 4 and the initial value of the disability condition is set based on the inputted personal information.

The user performs a log-in process (authentication process) using the obtained user name and password (step S101).

Then, the user sets the place of departure and the destination (step S102). After the log-in process is completed, the mobile computer 8 captures the map data from a map database of the database server 4.

Thereby the current position of the wheelchair obtained by the position measuring unit 6 and the map of the peripheral part thereof are displayed in the display unit 8c. The displayed map can be optionally displayed with changing the scale ratio.

In this case, the current position of the wheelchair obtained by the position measuring unit 6 is the point of departure, however the place of departure may be set by optionally clicking a certain position on the map displayed on the display unit 8c, or optionally selecting the place of departure from such as a list of the place name on the tree.

Additionally, in order to set the destination, a certain position on the map displayed on the display unit 8c is optionally clicked, or the destination is optionally selected from the list of the place name on the tree.

Then, the user sets the search condition from the mobile computer 8 (step S103). Where, the items such as "comfort priority" and "time priority" are selected.

Additionally, in order to set more detail search condition, a route detail setting screen is displayed on the display unit 8c thereby such as "easy to pass through" "average" and "difficult to pass through" may be set for each attribute (road surface condition, volume of traffic, slope, one-way traffic, etc.)

After the setting of the search condition is completed, the GIS server 3 searches the optimum route based on the inputted search condition and the sidewalk data of the database server 4 (step S104). The route search uses such as well-known Dijkstra method.

After the route to the destination is computed, the route is combined with the map data in the database server 4 to be an electronic map (step S105), and the electronic map is sent to the mobile computer 8. When the electronic map is received by the mobile computer 8, the map with the route is displayed on the display unit 8c (step S106).

The display unit 8c not only displays the map with the route but also may be added the guide by a spoken notification and a pinpoint display function such as the enlarged map of the cross-point.

Now, the guide route represented on the map is described.

The guide route is not the data based on the centerline of the road generally created for automobiles but constructed by the network of sidewalks for pedestrians in order to provide more detailed information for handicapped persons.

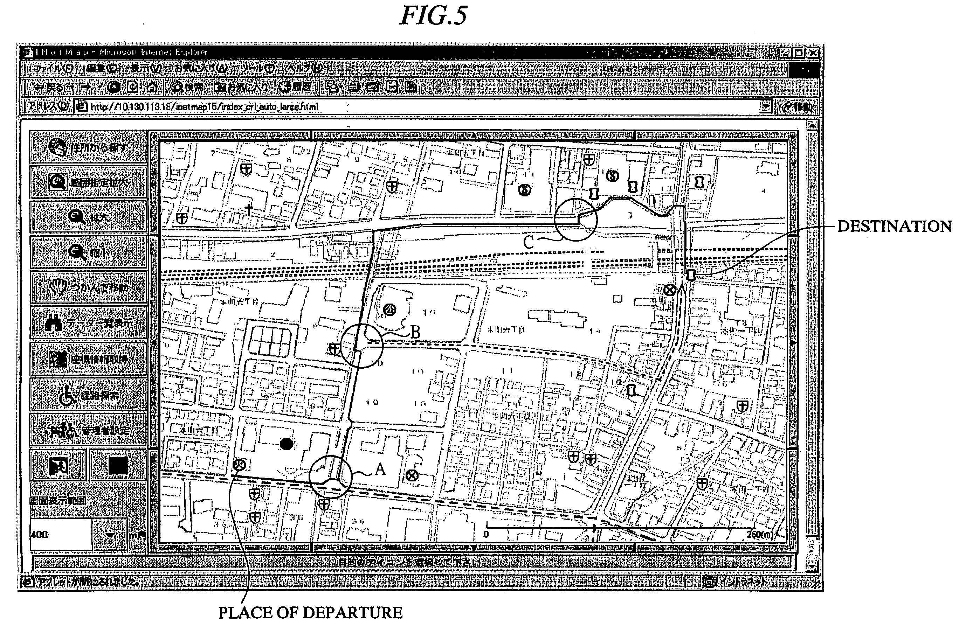

Since most sidewalks are provided on both sides of the drive way, both lines are controlled along blocks and it is displayed which of the right sidewalk or the left sidewalk is used as FIG. 5.

For example, it is advisedly guided to cross at the crosswalk and change the route from the left sidewalk to the opposite right sidewalk at A point of FIG. 5, because the fact that only the right sidewalk has the width more than about 160 cm required to pass the wheelchair has been confirmed based on the sidewalk data.

Additionally, it instructs to change the left sidewalk again at B point of FIG. 5, because the left sidewalk is provided with a step between the drive way and thereof but the right sidewalk is not provided with the step so that the pedestrian is at risk.

The route indicated as the dotted line in the figure is the shortcut from the B point to the destination apparently, however, it guides to the route by way of C point as the detour instead of the dotted line route, because many bicycles are illegally parked on the dotted line route so that the moving in the wheelchair is blocked.

Further, the reason for selecting the route by way of the C point, which is the detour to the destination, is that the sidewalk having a wide width and provided with guardrails and shrubberies is prioritized.

Thus users move according to the guide route thereby to be able to reach the destination in safety and in the shortest time.

While the user moves to the destination, each attribute information measured by the measuring unit 7 is stored in the database server 4 as the sidewalk data (step S107). The collected attribute information during moving are updated at any time and reflected in the next route search (step S104).

Additionally, if the user moves in the wheelchair without using the self-sustained moving support system 1, the self-sustained moving support system 1 has a function for automatically collecting the attribute information so that the attribute information is automatically collected by the mobile computer 8 without realizing by the user in moving. Thereby the attribute information is constantly updated.

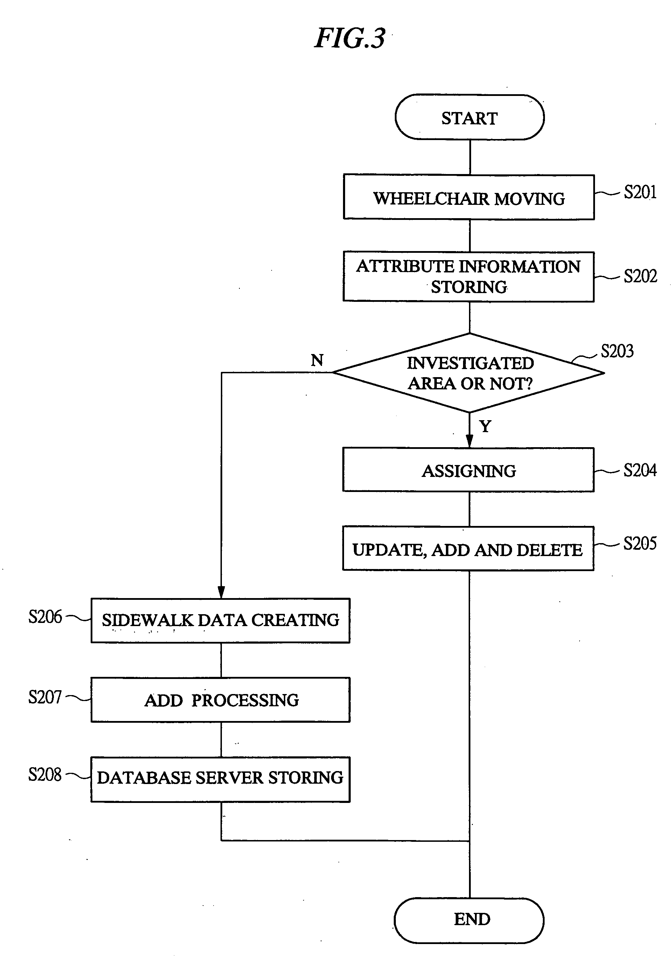

Now the collecting of the attribute information is described with reference to the flowchart of FIG. 3.

Firstly, when the user moves by the wheelchair (step S201), each attribute information measured by the measuring unit 7 is stored in the mobile computer 8 (step S202). Then the mobile computer 8 sends the stored attribute information to the GIS server 3.

Upon receiving the information from the mobile computer 8, the GIS server 3 determines whether the information is the investigated area or uninvestigated area (step S203). If the information is the investigated area, the collected attribute information is assigned to the sidewalk data of the existing area (step S204).

Then, the sidewalk data stored in the database server 4 is updated, added and deleted based on the assigned sidewalk data, and stored in the database server 4 (step S205).

On the other hand, if the information is the uninvestigated area in the step S203, a sidewalk data is created by the blocks on the map data and the positional information on the sidewalk map (step S206). The created sidewalk data is added (step S207) and stored in the database server 4(step S208).

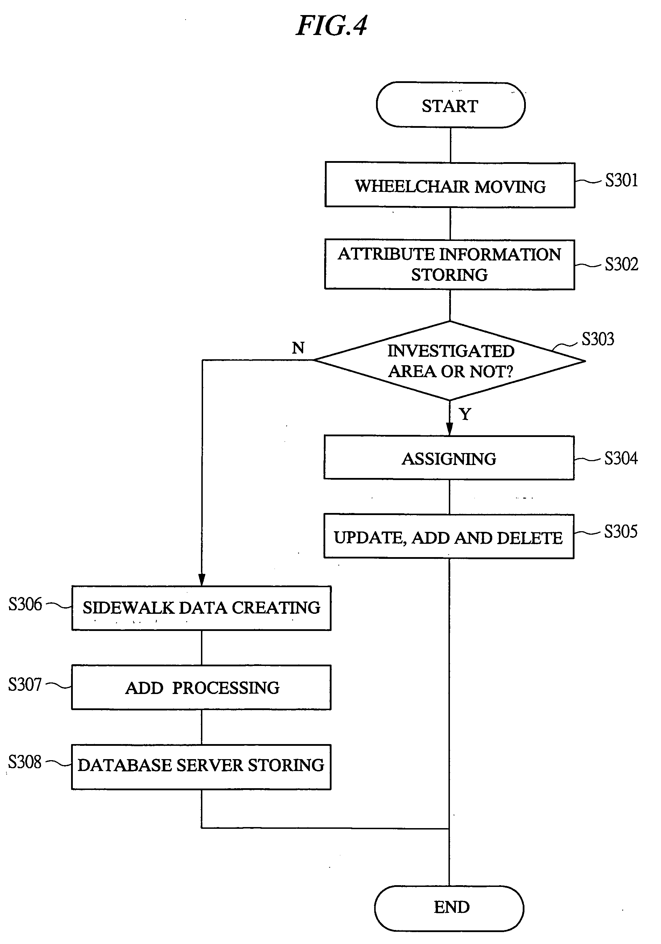

Next, described is the case where the attribute information is collected by not users but investigators with reference to the flowchart of FIG. 4. In this case, the investigator moves in such as a wheelchair in order to investigate. Incidentally, when the investigator moves to investigate, the dedicated moving means for investigation may be used instead of the wheelchair.

Firstly, when the investigator moves in the wheelchair (step S301), each attribute information measured by the measuring unit 7 is stored in the mobile computer 8 (step S302).

Where, the investigator inputs the items which are difficult to automatically obtain such as road names, the presence or absence of barriers such as a bench on the sidewalk and the entrance of a parking place in moving as the point information from the mobile computer 8. Thereby more detailed information is collected and accumulated in the mobile computer 8. Each information stored in the mobile computer 8 is sent to the GIS server 3.

The subsequent processes are same as the above described the step S203-S208. Upon receiving the information from the mobile computer 8, the GIS server 3 determines whether the information is the investigated area or uninvestigated area (step S303). If the information is the investigated area, the collected attribute information is assigned to the sidewalk data of the existing area (step S304).

Then, the sidewalk data stored in the database server 4 is updated, added and deleted based on the assigned sidewalk data, and stored in the database server 4 (step S305).

If the information is the uninvestigated area, a sidewalk data is created by the blocks on the map data and the positional information on the sidewalk map (step S306). The created sidewalk data is added (step S307) and a new sidewalk data is stored in the'database server 4(step S308).

These data which are collected and stored by the investigator or the user is reflected to calculate the route guide using the self-sustained moving support system 1.

For example, it is the change of the guide route, the correction of the parameter of the duration and the display of various warnings. The guide route is changed when the wheelchair can not pass because of the barrier on the sidewalk for example.

If the wheelchair can pass nevertheless the barrier exists on the sidewalk, a warning is displayed. The warning also may be displayed in the entrance of a parking place. Additionally, since the route having been used for a number of users can be certainly passed by wheelchair users, such route is preferentially guided as a recommended route.

The attribute information such as the sidewalk data may be updated by the result based on analyzing a plurality of data collected and stored by investigators or users.

The map information indicating the wheelchair-acceptable routes is opened to the public to share information on the WEB site. Thereby the map information can be freely viewed on not only the mobile computer 8 but also any device having the communication facility such as a PDA and a personal computer and being capable of connecting the communication network such as Internet and Intranet.

Thus according to the present embodiment, the attribute information can be automatically obtained in moving in the wheelchair so that the reliable attribute information can be updated at low cost and high speed.

Additionally, the route to the destination is navigated using the reliable and fresh attribute information so that the optimum route to be easily passed can be provided for handicapped persons and aged persons.

Further the route guide is mainly performed not for driveways but for sidewalks so that the high-safety route can be precisely provided.

It is to be understood that the present invention is not intended to be limited to the above-described embodiments, and various changes may be made therein without departing from the spirit of the present invention.

Incidentally, in the present embodiment, the case that the manual type wheelchair is used as moving means is described, however, other various moving means such as an electric wheelchair and an electric vehicle for seniors may be applied.

Additionally, in the present embodiment, the wheelchair is provided with the slope measuring unit, the distance measuring unit, the orientation measuring unit and the speed measuring unit, and adding to these, a voice measuring unit, a light measuring unit, an odor measuring unit, a material measuring unit, a temperature and humidity measuring unit and a direction measuring unit may be provided.

The voice measuring unit measures the surrounding noise such as a pachinko and the measurement is used as the information for vision or hearing-impaired persons. The light measuring unit measures the brightness of the sidewalk such as the presence of absence of a street lamp. The odor measuring unit measures the odor affecting on comfort. The material measuring unit measures the road surface condition. The temperature and humidity measuring unit measures the condition of facilities. The direction measuring unit supplementarily measures the current position measurement.

Thereby more accuracy route search can be achieved, and the safety and reliability of the guide route can be improved.

Additionally, the moving support system can be widely applied not only wheelchair users but also other handicapped persons. For example, the sidewalk with guardrails is preferentially set for visually impaired persons. Thus in the self-sustained moving support system, the optimum route can be provided for users depending on each disability condition.

### INDUSTRIAL APPLICABILITY

As thus described above, the self-sustained moving support system, and the method of the same and the recording media according to the present invention are suitable for the technology for setting the optimum guide route depending on each disability condition, the technology for updating the attribute information used for computing the guide route at low cost and high speed to obtain the reliable information.

## Claims

1. A self-sustained moving support system comprising:
a database for storing of a sidewalk data and a map data; and
information processing means connected to a communication network for searching the database based on moving support information received through the communication network, computing a guide route of a sidewalk to a destination depending on each disability condition from the sidewalk data and outputting an electronic map in which the guide route is combined with the map data.

2. The self-sustained moving support system according to claim 1, wherein the self-sustained moving support system further comprises a communication terminal connected to the communication network to display the electronic map received from the information processing means.

3. A self-sustained moving support system comprising:
a database for storing of a sidewalk data and a map data;
information processing means connected to a communication network for searching the database based on moving support information received through the communication network, computing a guide route of a sidewalk to a destination depending on each disability condition from the sidewalk data and outputting an electronic map in which the guide route is combined with the map data; and
moving means including a communication terminal connected to the communication network to display the electronic map received from the information processing means.

4. The self-sustained moving support system according to claim 3, wherein the moving means comprises an information measuring unit for collecting attribute information of a moving route.

5. A method of supporting a self-sustained moving comprising the steps of:
inputting physical information and a destination from a communication terminal;
computing a guide route of a sidewalk according to the physical information based on the physical information inputted from the communication terminal and sidewalk data stored in a database;
combining the computed guide route with a map data stored in the database to output it as an electronic map; and
displaying the electronic map showing the guide route on the communication terminal.

6. The method of supporting a self-sustained moving according to claim 5, wherein the guide route of the electronic map displayed on the communication terminal is displayed to designate the sidewalk to be passed.

7. The method of supporting a self-sustained moving according to claim 5 or claim 6, wherein the step of computing the guide route includes preferentially computing the sidewalk that has been passed by a plurality of users having similar physical information.

8. A method of supporting a self-sustained moving comprising the steps of:
automatically collecting attribute information of the route along which moving means is moved by an information measuring unit;
sending the collected attribute information to information processing means; and
updating the sidewalk data stored in a database based on the received attribute information.

9. The method of supporting a self-sustained moving according to claim 8, wherein the step of updating the sidewalk data further comprises the steps of:
determining whether the attribute information is an investigated area or not;
assigning the collected attribute information to the sidewalk data of an existing area and updating the sidewalk data stored in the database if the information is the investigated area; and
creating a new sidewalk data by a block on the map data, positional information or so on the sidewalk map and storing it to the database if the information is uninvestigated area.

10. A recording medium with record of a computer system-implemented program to perform the steps of:
computing a guide route of a sidewalk according to physical information and a destination inputted from a communication terminal based on a sidewalk data stored in a database; and
combining the computed guide route with a map data stored in the database and outputting it as an electronic map.

## Amended claims

### Amended claims under Art. 19.1 PCT

1. (Amended) A self-sustained moving support system comprising:
a database for storing of a sidewalk data and a map data;
information processing means connected to a communication network for searching the database based on moving support information received through the communication network, computing a guide route of a sidewalk to a destination depending on each disability condition from the sidewalk data and outputting an electronic map in which the guide route is combined with the map data; and
moving means including a communication terminal connected to the communication network to display the electronic map output from the information processing means;
wherein the moving means comprises an information measuring unit for collecting and updating attribute information of a moving route.

2. (Cancelled)

3. (Cancelled)

4. (Cancelled)

5. (Amended) A method of supporting a self-sustained moving comprising the steps of:
inputting physical information and a destination from a communication terminal;
computing a guide route of a sidewalk according to the physical information based on the physical information inputted from the communication terminal and sidewalk data stored in a database;
combining the computed guide route with a map data stored in the database to output it as an electronic map; and
displaying the electronic map showing the guide route on the communication terminal,
wherein the step of computing the guide route includes preferentially computing the sidewalk that has been passed by a plurality of users having similar physical information.

6. The method of supporting a self-sustained moving according to claim 5, wherein the guide route of the electronic map displayed on the communication terminal is displayed to designate the sidewalk to be passed.

7. (Cancelled)

8. A method of supporting a self-sustained moving comprising the steps of:
automatically collecting attribute information of the route along which moving means is moved by an information measuring unit;
sending the collected attribute information to information processing means; and
updating the sidewalk data stored in a database based on the received attribute information.

9. The method of supporting a self-sustained moving according to claim 8, wherein the step of updating the sidewalk data further comprises the steps of:
determining whether the attribute information is an investigated area or not;
assigning the collected attribute information to the sidewalk data of an existing area and updating the sidewalk data stored in the database if the information is the investigated area; and
creating a new sidewalk data by a block on the map data, positional information or so on the sidewalk map and storing it to the database if the information is uninvestigated area.

10. (Amended) A recording medium with record of a computer system-implemented program to perform the steps of:
updating a sidewalk data obtained by an information measuring unit;
computing a guide route of a sidewalk to a destination according to each disability condition from the sidewalk data stored in a database based on moving support information received through a communication network; and
combining the computed guide route with a map data stored in the database and outputting it as an electronic map.
